# DEMANDE DE BREVET EUROPEEN

(11) **EP 1 010 930 A1**
(43) Date de publication de la demande: **21.06.2000**
(21) Numéro de dépôt: 99420240.6
(22) Date de dépôt: 09.12.1999
(51) Int. Cl.: F16L 11/115, F16L 11/112, F16L 11/15

(54) **Flexible composite pour le transport de fluide et son procédé de fabrication**

(30) Priorité: 16.12.1998 FR 9816073
(71) Demandeur: M.R. INDUSTRIES, 42400 Saint-Chamond (FR)
(72) Inventeur: Grandouiller, Alain, 42100 Saint Etienne (FR); Colcombet, Thierry, 69540 Saint Cyr au Mont d'Or (FR)
(74) Mandataire: Perrier, Jean-Pierre

(57) **Abrégé**

Ce flexible composite comprend au moins une gaine extérieure en matière synthétique renforcée intérieurement par un ruban métallique lié à elle et, éventuellement, un tube intérieur en matière synthétique, de nature identique ou différente de celle de la gaine, les bords de ce ruban métallique étant liés, par soudage ou collage, avec ou sans recouvrement de ses bords pour former une enveloppe étanche aux fluides liquides ou gazeux.

Selon l'invention, ce flexible comporte, au moins dans ses zones devant être cintrées, un annelage (22) formé par des ondulations sinusoïdales dont l'amplitude (A) est au moins égale à deux fois l'épaisseur de ce flexible.

Dans une forme d'exécution, chacune de ses extrémités cylindriques (23) est incluse dans un raccord tubulaire (24) dont au moins la partie extérieure (33) est surmoulée sur cette extrémité

## Description

L'invention est relative à un flexible composite pour le transport de fluide et à son procédé de fabrication.

Il est déjà connu de réaliser des conduits composites dans lesquels une gaine extérieure et/ou un tube intérieur en matière synthétique de même nature, ou de natures différentes, sont renforcés par une armature interne, formée par un ruban métallique dont les bords sont liés, par soudure ou collage, ce ruban assurant également l'étanchéité du conduit vers l'extérieur.

De tels conduits permettent le transport en toute sécurité de tous fluides, liquides ou gazeux, y compris des fluides très volatils, comme par exemple, de l'essence ou du méthanol.

Ils présentent cependant l'inconvénient lorsqu'ils sont cintrés avec un faible rayon de courbure inférieur à 5 fois le diamètre, par exemple inférieur à 50 mm pour un diamètre de conduit de 10 mm, de se déformer localement en formant un pli transversal qui réduit leur section de passage et crée un point mécaniquement faible. Cette déformation est appelée croquage.

La présente invention a pour objet de fournir un flexible composite pouvant être cintré sans croquage, c'est à dire sans déformation de sa section de passage.

A cet effet, le flexible composite selon l'invention comporte, au moins dans ses zones devant être cintrées, un annelage formé par des ondulations sinusoïdales dont l'amplitude est au moins égale à deux fois l'épaisseur de ce flexible.

Lorsqu'un tel flexible est cintré, la déformation de son annelage absorbe les contraintes de compression et d'extension s'exerçant sur sa partie concave et sur sa partie convexe et empêche la réduction de sa section de passage, donc le phénomène de croquage.

Dans une forme d'exécution de l'invention, le ruban métallique est réalisé dans une nuance d'acier inoxydable ayant un coefficient d'allongement compris entre 40 et 80 % et à une épaisseur comprise entre 70 et 150 micromètres et est protégé sur au moins l'une de ses faces, par une gaine ou tube en matière synthétique ayant une épaisseur comprise entre 0,2 et 1 mm.

Avantageusement, chacune des extrémités du flexible est cylindrique et incluse dans un raccord tubulaire en matière synthétique dont au moins la partie extérieure est surmoulée sur cette extrémité.

L'invention concerne également le procédé de fabrication d'un flexible composite annelé consistant, après réalisation d'un conduit composite cylindrique composé d'une gaine extérieure en matière synthétique, d'un ruban métallique d'armature et d'étanchéité et, éventuellement, d'un tube intérieur en matière synthétique,
a) - à sectionner le conduit en tronçons de même longueur,
b) - à porter chaque tronçon à une température au moins égale à la température de plastification de la matière synthétique constituant la gaine et/ou tube liés au ruban métallique,
c) - à disposer le tronçon dans un moule en au moins deux parties comportant, au moins sur une partie de la longueur du flexible, une empreinte apte à former des ondulations sur le flexible,
d) - à fermer le moule,
e) - à obturer chaque extrémité du tronçon par des bouchons étanches dont l'un est tubulaire et raccordé à une source de fluide sous pression,
f) - à envoyer dans le tronçon disposé dans le moule du fluide sous une pression de l'ordre de 80 bars pour plaquer la paroi du tronçon contre l'empreinte ondulée du moule et déformer le ruban métallique et la gaine et/ou tube, dont la matière synthétique constitutive est malléable,
g) - à maintenir la pression dans le tronçon jusqu'à ce que la ou les matières synthétiques constituant la gaine et/ou le tube ne soient plus déformables,
h) - à ouvrir le moule et à retirer le flexible obtenu.

Ce procédé permet donc, à partir d'un tronçon de conduit composite, d'obtenir un flexible annelé dont l'annelage permanent facilite le cintrage et réduit considérablement les risques de déformation de la section de passage, mais aussi les risques de déchirure de l'armature.

Dans une forme de mise en oeuvre, le procédé selon l'invention consiste, après formation du flexible composite annelé, et à un autre poste de travail :
- à obturer chacune des extrémités cylindriques du flexible par un embout, tubulaire et cranté, solidaire du noyau tubulaire d'un raccord,
- à disposer le flexible ainsi équipé dans un moule comportant, en regard de chaque extrémité cylindrique de ce flexible, l'empreinte d'une enveloppe s'étendant longitudinalement depuis le bout correspondant du flexible jusqu'au-delà d'un collet arrière du noyau,
- à injecter dans chaque empreinte une matière synthétique de surmoulage,
- et à ouvrir le moule pour démouler le flexible comportant, à chacune de ses extrémités, un raccord surmoulé.

Dans une autre forme de mise en oeuvre, le procédé de fabrication consiste, après la phase a) de fermeture du moule et à la place de la phase e) d'obturation des extrémités du tronçon :
- à surmouler, sur chaque extrémité du tronçon, un raccord tubulaire en matière synthétique au moyen d'une empreinte ménagée dans le moule, et d'un noyau axial pénétrant dans l'extrémité cylindrique du tronçon, l'un de ces noyaux étant tubulaire et raccordé à une source de fluide sous pression,
- puis, dès que la matière constituant les raccords ainsi réalisés, n'est plus à l'état plastique, à reprendre les phases f) à g) de formation de l'annelage.

D'autres caractéristiques et avantages ressortiront de la description qui suit en référence au dessin schématique annexé.
Figures 1 et 2 sont des vues de face en bout de deux formes d'exécution d'un conduit composite de base,
Figure 3 est une vue en perspective du conduit composite de base,
Figure 4 est une vue en coupe d'un tronçon de tube composite préparé en vue de sa conformation en flexible annelé,
Figures 5, 6, 7 et 8 sont des vues en coupe longitudinale montrant différentes phases d'une première forme du procédé de fabrication du flexible composite,
Figure 9 est une vue de côté en coupe d'un moule pour le surmoulage d'un raccord sur l'extrémité d'un conduit,
Figure 10 est une vue en perspective du flexible composite obtenu,
Figure 11 est une vue en coupe transversale d'un moule dans une autre forme de mise en oeuvre du procédé de fabrication du flexible.

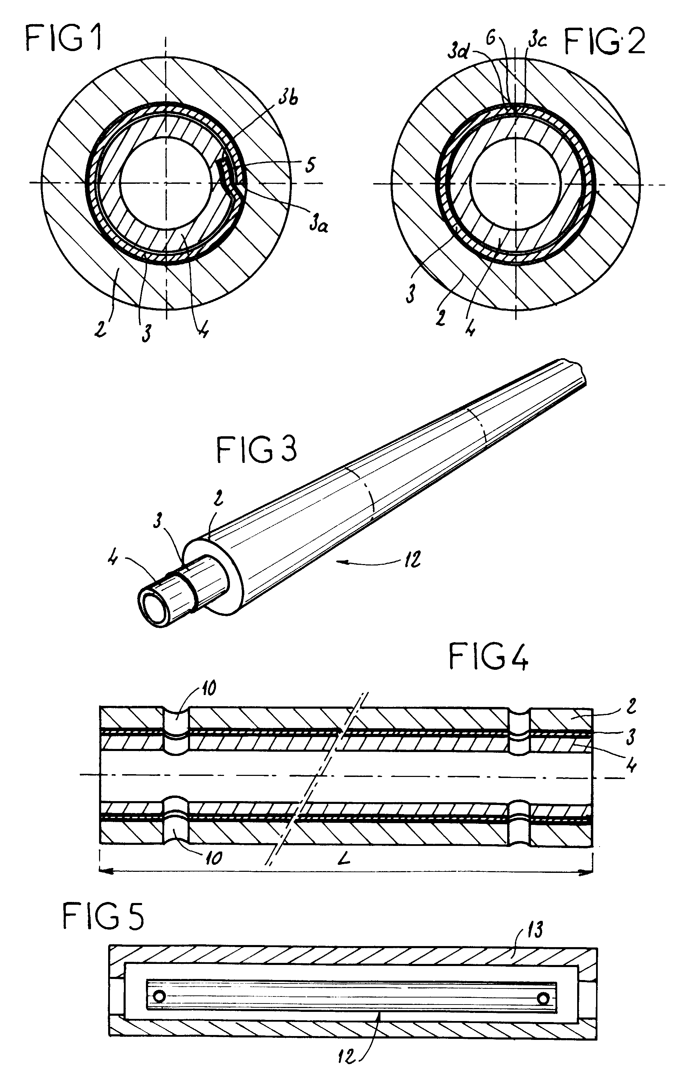

Aux figures 1 et 2 représentant, en coupe transversale, deux formes d'exécution du conduit composite permettant de réaliser le flexible selon l'invention, la référence numérique 2 désigne la gaine extérieure, celle 3 l'armature métallique et celle 4 le tube intérieur. A la figure 1, l'armature 3 est constituée par un ruban métallique dont les bords longitudinaux 3a et 3b sont superposés l'un à l'autre et liés par collage en 5, par exemple par un adhésif enduisant chacune des faces du ruban et servant également à la liaison de ce ruban, respectivement, la gaine extérieure 2 et le tube intérieur 4.

A titre d'exemple, lorsque la gaine extérieure 2 est composée d'un mélange ignifugé sans halogènes à base de polyoléfines, et le tube intérieur 4 d'un polyamide, l'adhésif est composé en couche interne d'un copolyamide, en couche externe d'un copolymère éthylène greffé anhydride maléique ou éthylène acide acrylique. Ces deux adhésifs étant compatibles et formant un joint homogène au point de contact 5.

Dans la forme d'exécution représentée à la figure 2, les bords longitudinaux 3c, 3d sont liés bord à bord en 6 par soudure.

Le procédé de fabrication de ces deux conduits est bien connu et consiste, après extrusion du tube intérieur 4 et pendant qu'il est encore chaud, à déposer sur lui le ruban métallique 3 d'armature, préalablement revêtu sur chacune de ses faces des adhésifs puis, après liaison des bords de ce ruban, à faire défiler l'ébauche obtenue dans le conduit interne d'une extrudeuse déposant sur l'ébauche la couche de matière constituant la gaine extérieure 2.

Dans une variante, les adhésifs sont coextrudés avec le tube intérieur 4 et la gaine extérieure 2. Ce procédé permet l'exécution de tubes composites multimatières adaptés au fluide transporté et à l'environnement extérieur en utilisant des matières polymériques internes et externes, indépendantes les unes des autres, dont le choix est illimité.

Selon l'invention, le ruban métallique 3 est constitué par un feuillard en acier inoxydable, par exemple de type AISI 304 ou 316, ayant une capacité d'allongement comprise entre 40 et 80 %, et par exemple de l'ordre de 57 %, et une épaisseur comprise entre 70 et 150 micromètres, et par exemple de l'ordre de 100 micromètres. Ce ruban de très faible épaisseur est associé à au moins une gaine extérieure 2, et éventuellement un tube intérieur 4 ayant chacun une épaisseur comprise entre 0,3 et 1 mm, et par exemple 0,4 mm.

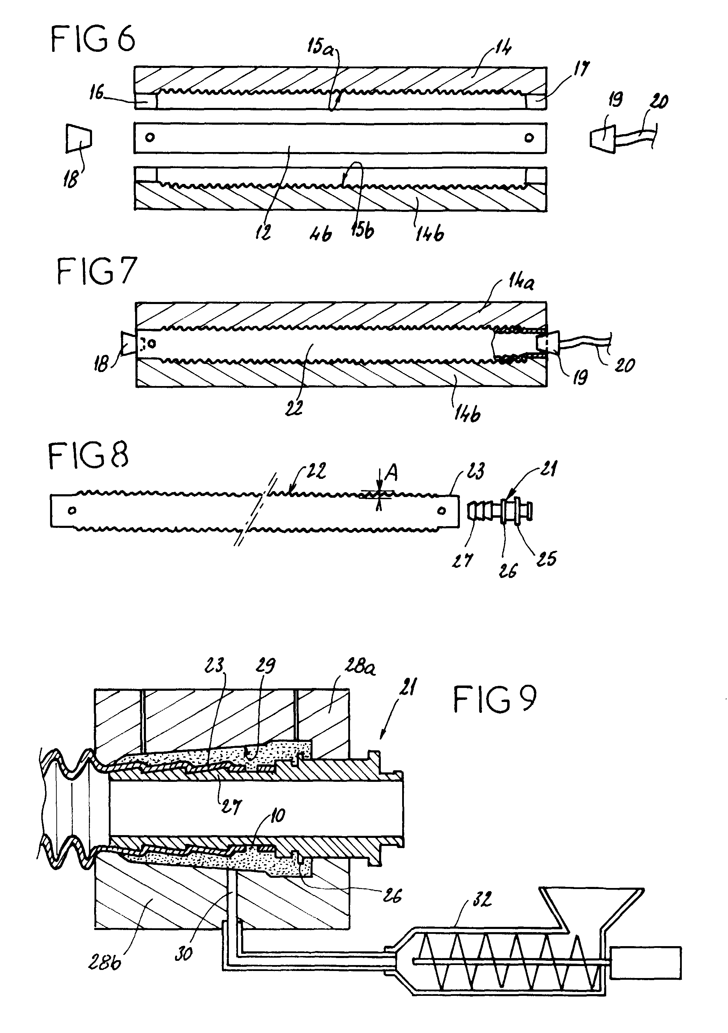

Pour obtenir un tronçon annelé avec ce conduit, ce dernier est débité en tronçons 12 de longueur constante L, puis, avantageusement, est soumis à une opération de perçage réalisant, à chacune de ses extrémités, et comme montré figure 4, au moins un canal radial 10, et deux canaux radiaux coaxiaux dans cette forme d'exécution. Pour réaliser un flexible annelé, chaque tronçon 12 ainsi obtenu est porté, par exemple par passage dans un four 13, représenté figure 5, à une température supérieure à la température de plastification des matières synthétiques constituant la gaine 2 et la gaine 4, et par exemple de l'ordre de 150° C.

Dans une phase suivante montrée à la figure 6, le tronçon 12, ainsi préchauffé, est disposé dans un moule en deux parties 14a, 14b comportant autour des zones devant être annelées et, dans le cas présent, sur la plus grande partie de la longueur du tronçon 12, une empreinte 15a, 15b présentant longitudinalement des ondulations longitudinales formant soit des anneaux, soit des spires hélicoïdales. Dans la forme d'exécution représentée, chacun des deux éléments du moule 14a, 14b est muni de portées cylindriques extrêmes 16 et 17, aptes à coopérer avec les extrémités cylindriques du conduit préchauffé 12.

Le conduit 12 reçoit à l'une de ses extrémités un bouchon 18 et à son autre extrémité un bouchon tubulaire 19 relié, par un conduit 20, à une source de fluide sous pression. Après fermeture du moule, et comme montré à la figure 7, le conduit 20 est alimenté en fluide sous pression, par exemple en fluide hydraulique à une pression de l'ordre de 80 bars. Sous l'effet de cette pression, et grâce à la faiblesse de l'épaisseur de l'armature et à l'état plastique de la matière synthétique composant le conduit composite, la paroi composite de celui-ci est plaquée contre la paroi de l'empreinte 15a, 15b et prend ainsi la forme annelée de cette empreinte. La pression est maintenue pendant une durée de l'ordre de 10 à 15 secondes, tandis que le moule est refroidi, par exemple par une circulation d'eau à 20 °C. Ce refroidissement redonne à la matière synthétique constituant chacune des gaines un état non plastique qui fixe la forme donnée par l'empreinte à la gaine 2, ou tube 4 et au ruban métallique 3.

Après démoulage, et comme montré à la figure 8, le flexible composite 22 ainsi obtenu est annelé sur la plus grande partie de sa longueur et comporte des extrémités cylindriques 23.

Il faut ici préciser que, dans ces conditions de fabrication et pour les épaisseurs de matériau indiqué plus en avant, il est possible d'obtenir des ondulations sinusoïdales dont l'amplitude A à la figure 8 est au moins égale à deux fois l'épaisseur du conduit composite d'origine et dont le pas est de l'ordre de 3 mm, ce qui forme des annelures suffisantes pour faciliter le cintrage ultérieur du flexible.

Le flexible ainsi obtenu est équipé, par surmoulage sur chacune de ses extrémités, d'un raccord tubulaire 24 permettant son raccordement.

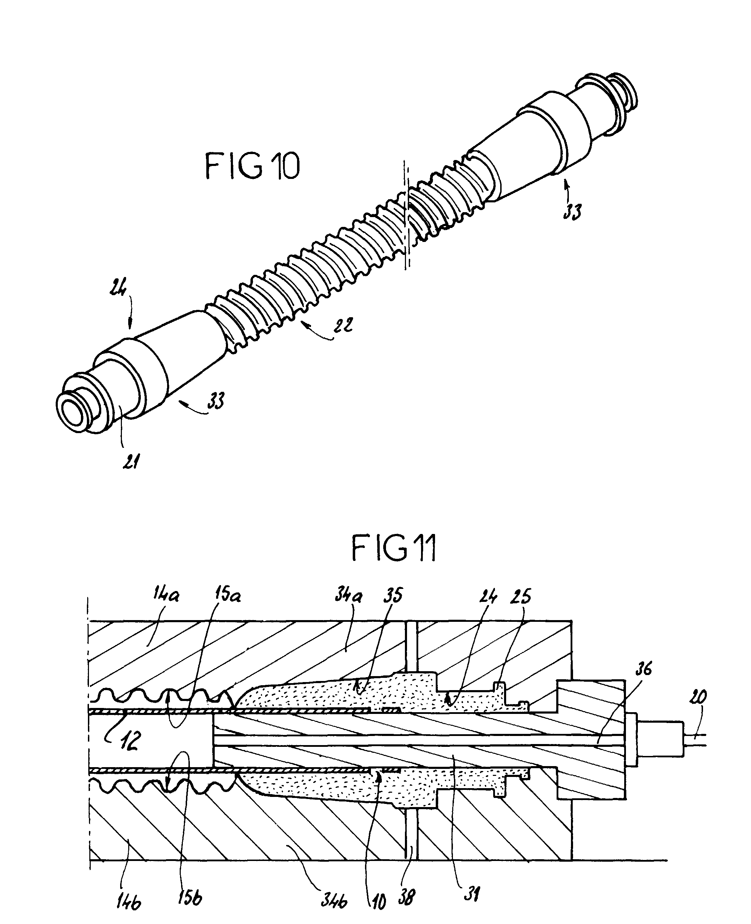

Dans la forme d'exécution représentée aux figures 8 et 9, chaque raccord 24 est composé d'un noyau tubulaire mâle 21 et d'une enveloppe externe 33. Chaque noyau 21 est équipé d'un collet avant 25 et d'un collet arrière 26, et se prolonge au-delà du collet arrière 26, par un embout tubulaire et cranté 27. Après engagement de l'embout 27 de chaque noyau 21 dans l'extrémité cylindrique 23 correspondante du flexible, le noyau et l'extrémité du flexible sont disposés dans un moule en deux parties 28a, 28b délimitant une empreinte 29 s'étendant sur toute l'extrémité cylindrique du flexible et coiffant le collet arrière 26. Cette empreinte 29 est reliée par un canal d'injection 30 à l'orifice de sortie d'une extrudeuse 32. Lorsque les deux parties du moule sont fermées et que l'extrudeuse 32 débite par le canal 30 dans l'empreinte 29, celle-ci réalise sur l'extrémité du flexible et sur le noyau 21 emmanché dans son extrémité, une enveloppe 33 visible figure 10. Lors de l'injection, la matière synthétique pénétrant dans l'empreinte s'insère également dans les canaux radiaux 10 pour venir au contact de l'embout 27 en réalisant ainsi, dans chacun de ces trous 10, un organe d'ancrage en forme de tenon contribuant au calage en translation longitudinale de l'embout sur l'extrémité du flexible. Après démoulage, le flexible peut être utilisé.

La matière synthétique assurant la formation du raccord 24 par surmoulage est choisie parmi celle adhérant au moins à celle composant la gaine extérieure 2, et par exemple est en polyamide chargé en fibres de verre.

Selon les formes de mise en oeuvre, l'organe de connexion ainsi réalisé à une extrémité peut être réalisé séparément sur l'autre extrémité, ou simultanément, si le poste de travail comporte deux moules espacées aptes à venir enserrer chacun l'une des extrémités du flexible composite obtenu précédemment.

La figure 11 montre une variante de réalisation du procédé de fabrication de ce flexible composite.

Les deux éléments 14a, 14b du moule assurant la formation de l'annelage sont prolongés, de chaque côté, par des éléments de moule 34a, 34b portant une empreinte 35 reproduisant la forme de l'enveloppe 33 et l'extrémité libre du noyau 21 avec son collet 25. Le moule 14a-34a et 14b-34b est associé, à chacune de ses extrémités, à un noyau tubulaire 31 apte à s'engager longitudinalement dans l'empreinte 35. Le canal axial 36 de ce noyau 31 débouche, d'un côté, au-delà de l'empreinte 35, à proximité de l'empreinte 15a-15b de formation de l'annelage, et est raccordé, de l'autre côté, à un conduit 20 provenant d'une source de fluide sous pression.

Dans ces conditions, le tronçon 12 de conduit composite, préalablement préchauffé, est disposé entre les deux éléments du moule, puis le moule est refermé. A ce stade, chacune des empreintes 35 ménagée dans les moules extrêmes 34a, 34b est alimentée en matière synthétique à l'état liquide par un canal d'injection 38, de manière à former le raccord 33 sur l'extrémité cylindrique du conduit. Dès que ce raccord est réalisé et pendant qu'il se solidifie, le fluide sous pression est envoyé dans le tronçon 12 pour déformer ce conduit et former l'annelage. A partir de là, la succession des phases est la même que pour le procédé précédent, à savoir maintien de la pression pendant une durée de 10 à 15 secondes, et ouverture du moule pour démoulage.

Ce procédé met en oeuvre des moyens plus complexes mais réduit le temps de fabrication du flexible composite montré à la figure 10.

Dans les formes d'exécution représentées, le raccord est muni en deçà du collet 25 d'une extrémité libre cylindrique et épaulée, destinée à recevoir un écran serti, mais il est évident que cette extrémité peut présenter toute autre forme en rapport avec les moyens choisis et connus pour assurer la connexion du conduit.

## Revendications

1. Flexible composite pour le transport de fluide comprenant au moins une gaine extérieure (2) en matière synthétique renforcée intérieurement par un ruban métallique (3) lié à elle et, éventuellement, un tube intérieur (4) en matière synthétique, de nature identique ou différente de celle de la gaine (2), les bords de ce ruban métallique 3 étant liés, par soudage ou collage, avec ou sans recouvrement de ses bords pour former une enveloppe étanche aux fluides liquides ou gazeux, **caractérisé en ce qu**'il comporte, au moins dans ses zones devant être cintrées, un annelage (22) formé par des ondulations sinusoïdales dont l'amplitude (A) est au moins égale à deux fois l'épaisseur de ce flexible.

2. Flexible selon la revendication 1, **caractérisé en ce que** le ruban métallique (3) est réalisé dans une nuance d'acier inoxydable ayant un coefficient d'allongement compris entre 40 et 80 % et à une épaisseur comprise entre 70 et 150 micromètres et est protégé, sur au moins l'une de ses faces, par une gaine extérieure (2) ou tube intérieur (4) en matière synthétique ayant une épaisseur comprise entre 0,2 et 1 mm.

3. Flexible selon la revendication 1, **caractérisé en ce que** chacune de ses extrémités cylindriques (23) est incluse dans un raccord tubulaire (24) dont au moins la partie extérieure (33) est surmoulée sur cette extrémité

4. Flexible selon la revendication 1, **caractérisé en ce que** chacune de ses extrémités cylindriques (23) est munie d'un raccord tubulaire (24) composé d'un noyau axial (21) et d'une enveloppe (33), l'embout cranté (27) du noyau (21) étant emmanché dans ladite extrémité du flexible, et lié à cette extrémité par l'enveloppe (33) surmoulée sur un collet (26) du noyau (21) et sur l'extrémité du flexible, ce surmoulage étant réalisé par une matière synthétique choisie parmi celles adhérant au moins à la matière synthétique constituant la gaine extérieure (2) du flexible.

5. Flexible selon la revendication 1, **caractérisé en ce que** chacune de ses extrémités cylindriques (23) est traversée par au moins un canal radial (10) formant organe d'ancrage pour un tenon solidaire d'une enveloppe surmoulée (33).

6. Procédé de fabrication d'un flexible composite selon la revendication 1, **caractérisé en ce qu**'il consiste, après réalisation d'un conduit composite cylindrique composé d'une gaine extérieure (2) en matière synthétique, d'un ruban métallique (3) d'armature et d'étanchéité et, éventuellement, d'un tube intérieur (4) en matière synthétique :
a) - à sectionner le conduit en tronçons (12) de même longueur,
b) - à porter chaque tronçon (12) à une température au moins égale à la température de plastification de la matière synthétique constituant la gaine (2) et/ou le tube (4) liés au ruban métallique (3),
c) - à disposer le tronçon (12) dans un moule en au moins deux parties (14a, 14b) comportant, au moins sur une partie de la longueur du flexible, une empreinte (15a, 15b) apte à former des ondulations sur le flexible,
d) - à fermer le moule,
e) - à obturer chaque extrémité du tronçon (12) par des bouchons (18, 19) dont l'un (19) est tubulaire et raccordé à une source de fluide sous pression,
f) - à envoyer dans le tronçon (12) disposé dans le moule (14a, 14b) du fluide sous une pression de l'ordre de 80 bars pour plaquer la paroi du tronçon contre l'empreinte ondulée (15a, 15b) du moule et déformer le ruban métallique (3) et la gaine (2) et/ou le tube (4), dont la matière synthétique constitutive est malléable,
g) - à maintenir la pression dans le tronçon (12) jusqu'à ce que la ou les matières synthétiques constituant la gaine (2) et/ou le tube (4) ne soient plus déformables,
h) - à ouvrir le moule (14a, 14b) et à retirer le flexible (22) obtenu.

7. Procédé selon la revendication 6, **caractérisé en ce qu**'il consiste, après formation des ondulations dans le tronçon de conduit composite (22) :
- à obturer chacune les extrémités cylindriques du flexible (22) par un embout tubulaire et cranté (27) solidaire du noyau tubulaire (21) d'un raccord,
- à disposer le flexible (22) ainsi équipé dans un moule (28a, 28b) comportant, en regard de chaque extrémité cylindrique (23) du flexible (22), l'empreinte (29) d'une enveloppe (33) s'étendant longitudinalement depuis le bout correspondant du flexible (22) jusqu'au-delà d'un collet arrière (26) du noyau (21),
- à injecter dans chaque empreinte (29) une matière synthétique de surmoulage,
- et à ouvrir le moule pour démouler le flexible comportant, à chacune de ses extrémités, un raccord surmoulé (24).

8. Procédé selon la revendication 6, **caractérisé en ce qu**'il consiste, après la phase d) de fermeture du moule (14a, 14b) et à la place de la phase e) d'obturation des extrémités du tronçon :
- à surmouler, sur chaque extrémité du tronçon (12), un raccord tubulaire (24) en matière synthétique au moyen d'une empreinte (35) ménagée dans le moule, et d'un noyau axial (31) pénétrant dans l'extrémité cylindrique du tronçon, l'un de ces noyaux (31) étant tubulaire et raccordé à une source de fluide sous pression,
- puis dès que la matière constituant les raccords (24) ainsi réalisés n'est plus à l'état plastique, à reprendre les phases f) à g) de formation de l'annelage.
